# EUROPÄISCHE PATENTSCHRIFT

(11) **EP 2 410 461 B1**
(45) Veröffentlichungstag und Bekanntmachung des Hinweises auf die Patenterteilung: **30.08.2017**
(21) Anmeldenummer: 11174050.2
(22) Anmeldetag: 14.07.2011
(51) Int. Cl.: G06K 7/00

(54) **Identifikationssystem, Verfahren zum berührungslosen Beschreiben und/oder Lesen eines Datenträgers und Anwendung**
Identification system, method for contactless writing and/or reading of a data carrier and application
Système d'identification, procédé de description et/ou de lecture sans contact d'un support de données et utilisation

(30) Priorität: 19.07.2010 DE 102010031516
(43) Veröffentlichungstag der Anmeldung: 25.01.2012
(73) Patentinhaber: BALLUFF GmbH, 73765 Neuhausen (DE)
(72) Erfinder: Reuker, Dieter, 70619 Stuttgart (DE); Matzke, Gerhard, 73760 Ostfildern (DE); Höhn, Claus, 72657 Altenriet (DE); Hauser, Fabian, 73207 Plochingen (DE)
(74) Vertreter: Hoeger, Stellrecht & Partner Patentanwälte mbB

(56) Entgegenhaltungen:
- DE-A1-102007 061 707
- US-A1- 2009 091 449

## Beschreibung

Die Erfindung betrifft ein Identifikationssystem, umfassend mindestens einen Datenträger, an welchem Daten gespeichert oder speicherbar sind und welcher keine eigene Energiequelle aufweist, und mindestens eine Schreib-/Leseeinrichtung, durch welche Daten an dem Datenträger berührungslos schreibbar sind und/oder Daten aus dem Datenträger berührungslos auslesbar sind. Die Erfindung betrifft ferner ein Verfahren zum berührungslosen Beschreiben und/oder Lesen eines Datenträgers.

Weiterhin betrifft die Erfindung eine Anwendung, welche ein Identifikationssystem aufweist.

Identifikationssysteme der eingangs genannten Art werden beispielsweise dazu genutzt, die Anwesenheit beziehungsweise Abwesenheit eines Gegenstands, an welchem ein Datenträger sitzt, zu überwachen. Es kann beispielsweise auch die Positionsänderung eines Objekts, an welchem ein Datenträger sitzt, verfolgt werden.

In dieser Anmeldung wird unter Schreib-/Leseeinrichtung eine Einrichtung verstanden, welche entweder nur zum Beschreiben von Datenträgern geeignet ist, oder nur zum Lesen von Daten aus Datenträgern geeignet ist, oder sowohl Schreibvorgänge als auch Lesevorgänge an Datenträgern durchführen kann.

Aus der US 2009/0091449 A1 ist eine Leseantenne für ein Radiofrequenzidentifizierungslabel bekannt, welche einen ersten Bereich innerhalb einer Gewichtsplatte geeignet zur Benutzung mit einer Waage und einen zweiten Bereich zum Anregen des ersten Bereichs umfasst. Anspruch 1 ist gegenüber diesem Dokument abgegrenzt. Aus der DE 196 37 964 A1 ist eine Einrichtung zum induktiven hochfrequenten Datenaustausch zwischen einer Resonanzkreisspule eines Terminals und einer Koppelspule eines kontaktlosen Transponders durch Amplitudenmodulation infolge Bedämpfung des Koppelfeldes bekannt.

Aus der DE 692 30 697 T2 ist ein Target zur Verwendung in einem automatischen Identifizierungssystem mit einer Vielzahl von unabhängigen Festkörper-Resonatoren bekannt, wobei die Resonatoren in dem Target bei einer Vielzahl von Funkfrequenzen in Resonanz kommen.

Aus der DE 60 2004 009 462 T2 ist ein Transponder bekannt, der eine Antenne, eine Gleichrichterschaltung, eine durch diese Gleichrichterschaltung gespeiste Logikschaltung und einen Modulationstransistor, der zwischen die Gleichrichterschaltung und die Logikschaltung geschaltet ist, umfasst, wobei der Modulationstransistor durch die Logikschaltung gesteuert wird, um Antwortsignale des Transponders zu erzeugen.

Der Erfindung liegt die Aufgabe zugrunde, ein Identifikationssystem der eingangs genannten Art bereitzustellen, mittels welchem sich Datenträger sicher beschreiben und/oder lesen lassen. Die Erfindung ist Gegenstand der unabhängigen Ansprüche. Aperturstrahler sind Wellenleiter mit einer oder mehreren Aperturen wie kleinen Schlitzen beziehungsweise Öffnungen in einem Außenleiter. Die Öffnungen im Außenleiter bilden Inhomogenitäten des Wellenleiters, an denen elektromagnetische Energie austreten kann. Das elektromagnetische Feld zwischen einem Innenleiter und einem Außenleiter und insbesondere dessen Magnetfeldanteil erzeugt einen Oberflächenstrom am Außenleiter. Die Umleitung des Oberflächenstroms um die Öffnung erzeugt ein Dipolmoment am Ort der entsprechenden Apertur. Bei dem Aperturstrahler wird der magnetische Feldanteil des elektromagnetischen Felds zwischen Außenleiter und Innenleiter anteilig abgestrahlt. Der elektrische Feldanteil der Welle durchdringt die Öffnung senkrecht zum magnetischen Feldanteil. Durch Größe, Form und Abstand der Aperturen lässt sich das Abstrahlverhalten des Aperturstrahlers einstellen.

Grundsätzlich lässt sich beim Aperturstrahler eine Abstrahlung an den Stellen erreichen, an dem eine Apertur sitzt. Dadurch ist eine Abstrahlung beziehungsweise ein Empfang grundsätzlich über eine gesamte Länge des Aperturstrahlers, wenn über die gesamte Länge Aperturen angeordnet sind, oder an einem oder mehreren bestimmten Abschnitten mit Aperturen möglich.

Es ist auch auf einfache Weise möglich, durch entsprechende Anordnung von Aperturen Bereiche bereitzustellen, in welchen keine Abstrahlung erfolgen soll, sondern in denen beispielsweise elektromagnetische Leistung möglichst verlustarm transportiert werden soll.

Durch die erfindungsgemäße Lösung ergeben sich umfangreiche Einsatzmöglichkeiten. Auch im Nahbereich (in der Größenordnung einer halben Wellenlänge) erhält man eine gleichmäßige Abstrahlung und es kommt nicht oder nur in geringem Umfang zu Störung durch Reflektionen und Interferenzen.

Es lassen sich auch lange Verfahrwege gleichmäßig und kostengünstig mit Strahlung beaufschlagen. Es lässt sich dadurch ein großer Versatz über eine große Länge erreichen.

Eine besonders vorteilhafte Anwendung ist die Überwachung, ob eine Öffnung oder Tor durchfahren wird, auch wenn die exakte Position des Datenträgers nicht bekannt ist. An einer Umrandung der Öffnung beziehungsweise des Tors wird ein Aperturstrahler angeordnet. Der Datenträger ist an einem Objekt fixiert, welches durch die Öffnung beziehungsweise das Tor durchfahren kann. Durch das entsprechende Identifikationssystem lässt sich dies dann auf einfache Weise feststellen. (Wenn beispielsweise das Objekt, welches die Öffnung beziehungsweise das Tor durchfahren kann, äußere Abmessungen aufweist, die nahe an den Innenabmessungen der Öffnung beziehungsweise des Tors liegen, kann ein Datenträger nur mit geringem Abstand zu der Umrandung liegen, wenn die Öffnung beziehungsweise das Tor durchfahren wird.)

Das erfindungsgemäße Identifikationssystem lässt sich auch einsetzen, wenn der Aperturstrahler in metallischem Material eingebaut ist, sofern die Aperturen nicht durch metallisches Material abgedeckt sind.

Der Aperturstrahler bildet eine linienförmige Antenne mit einer Mehrzahl von in einer Längserstreckungsrichtung des Aperturstrahlers beabstandeten Aperturen. Über die Aperturen erfolgt die elektromagnetische Kopplung zwischen dem mindestens einen Datenträger und der Schreib-/Leseeinrichtung.

Bei einer Ausführungsform ist der mindestens eine Aperturstrahler ein Schlitzkabel. Ein Schlitzkabel ist ein Koaxialkabel, welches am Außenleiter mit Schlitzen versehen ist.

Ein weiteres Beispiel für einen Aperturstrahler ist eine strip line. Eine strip line (manchmal auch als micro strip line bezeichnet) ist ein planarer beziehungsweise flächiger Streifenleiter.

Die Energie für einen Datenaustausch mit der Schreib-/Leseeinrichtung ist durch die Schreib-/Leseeinrichtung bereitgestellt und insbesondere ist diese durch das elektromagnetische Feld der Schreib-/Leseeinrichtung bereitgestellt. Durch Ankopplung des Datenträgers an das elektromagnetische Feld kann dieser dem elektromagnetischen Feld die entsprechende Energie entnehmen, um einen Auslesevorgang beziehungsweise einen Schreibvorgang zu ermöglichen.

Insbesondere erfolgt der Datenaustausch zwischen der Schreib-/Leseeinrichtung im GHz-Bereich und beispielsweise im UHF-Bereich, das heißt im Bereich zwischen 0,3 GHz und 3 GHz, das heißt im Dezimeter-Wellenbereich.

Ganz besonders vorteilhaft ist es, wenn der mindestens eine Datenträger im Nahbereich des mindestens einen Aperturstrahlers positioniert ist und/oder in diesen und/oder in diesem beweglich ist. Dadurch ergibt sich eine effektive Ankopplung. Der Nahbereich liegt dabei in der Größenordnung einer halben Wellenlänge. Wenn beispielsweise der mindestens eine Datenträger sich permanent in dem Nahbereich bewegt, kann überwacht werden, ob der Datenträger sich in einem bestimmten Bereich befindet. Gegebenenfalls ist eine Ortsbestimmung durchführbar. Durch die Bewegung in den Nahbereich (beziehungsweise aus diesem heraus) kann ermittelt werden, ob ein Datenträger einen bestimmten vorgegebenen Bereich erreicht oder nicht.

Günstigerweise ist der mindestens eine Aperturstrahler mit einem Abschlusswiderstand versehen.

Vorteilhafterweise ist eine Bewegungsrichtung einer Bewegung des mindestens einen Datenträgers relativ zu der Schreib-/Leseeinrichtung mindestens näherungsweise parallel zu einer Längserstreckungsrichtung des mindestens einen Aperturstrahlers und/oder quer zu dieser Längserstreckungsrichtung. Bei einer rein parallelen Bewegung bleibt dann der Querabstand zwischen dem mindestens einen Datenträger und dem Aperturstrahler auch bei Bewegung des mindestens einen Datenträgers relativ zu dem Aperturstrahler erhalten. Dadurch ist es grundsätzlich beispielsweise auch möglich, eine Überwachung nicht nur auf die Anwesenheit oder Abwesenheit eines Objekts durchzuführen, sondern es ist auch eine Positionsbestimmung möglich. Bei einer Querbewegung kann beispielsweise ermittelt werden, ob der mindestens eine Datenträger in einen Überwachungsbereich eindringt oder aus einem Überwachungsbereich herausfährt. Der mindestens eine Datenträger umfasst eine Antenne. Diese erzeugt in der Regel ein Dipolfeld beziehungsweise ist von einem Dipolfeld beaufschlagt mit einer Dipolachse. Eine parallele Ausrichtung des Datenträgers zu der Längserstreckungsrichtung des mindestens einen Aperturstrahlers bedeutet eine parallele Ausrichtung dieser Achse. Entsprechend bedeutet eine Querbewegung eine Querbeweglichkeit dieser Achse zu der Längserstreckungsrichtung.

Bei einer vorteilhaften Ausführungsform ist dann die mindestens eine Schreib-/Leseeinrichtung mindestens ein Aperturstrahler angeschlossen, welcher einen Aperturbereich mit Aperturen aufweist. Der Aperturstrahler kann auch Nichtabstrahlungsbereiche ohne Aperturen aufweisen, die vor allem zur Übertragung von elektromagnetischer Energie innerhalb des Aperturstrahlers dienen. Es lässt sich dadurch beispielsweise eine Kaskadierung von Nichtaperturbereichen und Aperturbereichen erreichen. Dadurch kann auf energiesparende Weise beispielsweise ein Objekt in beabstandeten Bereichen überwacht werden.

Insbesondere ist eine Mehrzahl von Aperturbereichen vorgesehen, wobei benachbarte Aperturbereiche beabstandet sind mit einem zwischenliegenden Nichtaperturbereich, wobei der Abstand zwischen Aperturen in einem Aperturbereich kleiner ist als der Abstand zwischen Aperturbereichen. An den Aperturbereichen erfolgt eine Abstrahlung für elektromagnetische Energie. Über einen Nichtaperturbereich wird einem Aperturbereich elektromagnetische Energie zugeführt. Wenn sich beispielsweise ein Objekt in einer Längserstreckungsrichtung eines Aperturstrahlers mit Nichtaperturbereichen und Aperturbereichen bewegt, dann kann aus der Kenntnis der Länge von Aperturbereichen und Nichtaperturbereichen beispielsweise auch die Geschwindigkeit des Objekts ermittelt werden.

Ganz besonders vorteilhaft ist es, wenn der mindestens eine Datenträger bezüglich einer Schreib-/Leseseite der mindestens einen Apertur des mindestens einen Aperturstrahlers zugewandt ist. Dadurch ergibt sich eine effektive elektromagnetische Kopplung zwischen dem Datenträger und der Schreib-/Leseeinrichtung zum Beschreiben beziehungsweise zum Auslesen von Daten.

Günstig ist es, wenn der mindestens eine Datenträger mindestens einen nichtflüchtigen Speicher aufweist. In dem Speicher können Daten nichtvolatil gespeichert werden.

Insbesondere ist der mindestens eine Datenträger ein RFID-Datenträger.

Bei einer vorteilhaften Ausführungsform weist die Schreib-/Leseeinrichtung eine Laufzeitmesseinrichtung auf, durch welche eine Wellenlaufzeit an dem mindestens einen Aperturstrahler messbar ist. Dadurch ist es möglich, beispielsweise den Ort einer Apertur zu bestimmen, über welchem die stärkste Kopplung erfolgt. Dadurch wiederum lässt sich die Position eines Datenträgers ermitteln.

Bei einer Ausführungsform weist der mindestens eine Aperturstrahler eine Platine auf, an welcher Leiterlagen und ein Kern angeordnet sind, wobei in mindestens einer Leiterlage mindestens eine Apertur gebildet ist. Die Leiterlagen sind insbesondere metallische Lagen, welche an einer isolierenden Platine angeordnet sind und dabei den Außenleiter bilden. Der Kern, welcher von Isolatormaterial der Platine umgeben ist, bildet den Innenleiter. Auf diese Weise lässt sich ein Aperturstrahler mit einer Längserstreckungsrichtung und starrer Struktur bereitstellen.

Insbesondere sind die Leiterlagen, welche beispielsweise Leiterlagen an einer Oberseite und einer Unterseite einer Platine sind, leitend verbunden, um einen Außenleiter bereitzustellen.

Eine leitende Verbindung lässt sich beispielsweise durch eine metallische Beschichtung von Seitenflächen erreichen. Bei einer Ausführungsform verlaufen zwischen den Leiterlagen Ausnehmungen, welche mit Leitermaterial gefüllt sind. Diese mit Leitermaterial gefüllten Ausnehmungen lassen sich auf einfache Weise beispielsweise durch Bohrungen an einer Platine herstellen. Die Füllung mit Leitermaterial sorgt für eine Kurzschlussverbindung zwischen den Leiterlagen, um den Außenleiter bereitzustellen.

Der Erfindung liegt ferner die Aufgabe zugrunde, ein Verfahren zum berührungslosen Beschreiben und/oder Lesen eines Datenträgers bereitzustellen.

Diese Aufgabe wird erfindungsgemäß dadurch gelöst, dass elektromagnetische Energie über einen Aperturstrahler abgestrahlt und/oder empfangen wird und der Datenträger mit einer Schreibseite und/oder Leseseite auf Aperturen des Aperturstrahlers ausgerichtet wird.

Das erfindungsgemäße Verfahren weist die bereits im Zusammenhang mit dem erfindungsgemäßen Identifikationssystem erläuterten Vorteile auf.

Weitere vorteilhafte Ausführungen wurden ebenfalls bereits im Zusammenhang mit dem erfindungsgemäßen Identifikationssystem erläutert.

Das erfindungsgemäße Identifikationssystem lässt sich an einer Anwendung positionieren. Insbesondere ist dabei der mindestens eine Aperturstrahler an einem Durchfahrtsbereich oder Positionierbereich für ein Objekt angeordnet, welches mit mindestens einem Datenträger versehen ist.

Es lässt sich dadurch beispielsweise die Position eines Objekts als Schaltposition oder als analoge Position ermitteln. Beispielsweise kann dadurch auf einfache Weise geprüft werden, ob ein Objekt durch ein Tor oder dergleichen durchfährt.

Es ist beispielsweise auch möglich, das Vorhandensein oder das Fehlen eines Objekts zu detektieren.

Die nachfolgende Beschreibung bevorzugter Ausführungsformen dient im Zusammenhang mit den Zeichnungen der näheren Erläuterung der Erfindung. Es zeigen:
- Figur 1: Eine schematische Darstellung eines Ausführungsbeispiels eines erfindungsgemäßen Identifikationssystems;
- Figur 2: eine Schnittansicht längs der Linie 2-2 bei einem Aperturstrahler in Form eines Schlitzkabels gemäß Figur 1;
- Figur 3: eine Schnittansicht längs der Linie 3-3 gemäß Figur 1 mit einem zugeordneten Datenträger;
- Figur 4: eine schematische Darstellung eines weiteren Ausführungs-beispiels eines Aperturstrahlers;
- Figur 5: eine Schnittansicht längs der Linie 5-5 gemäß Figur 4;
- Figur 6: ein Ausführungsbeispiel einer Anwendung in schematischer Dar-stellung (Tordurchfahrt); und
- Figur 7: ein weiteres Ausführungsbeispiel einer Anwendung in schema-tischer Darstellung (Palettenüberfahrt).

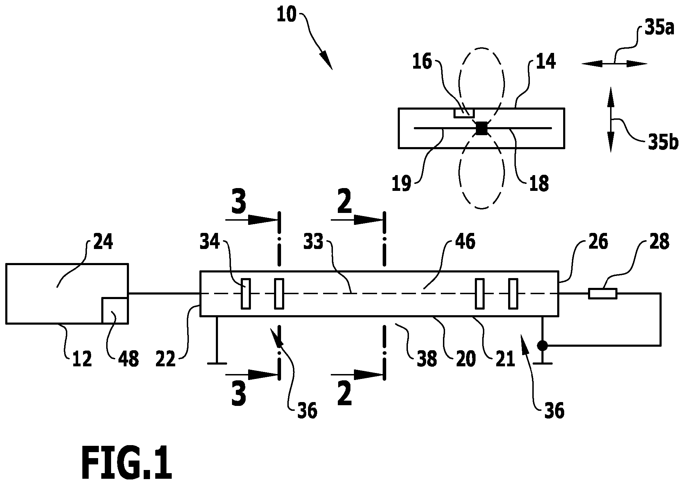

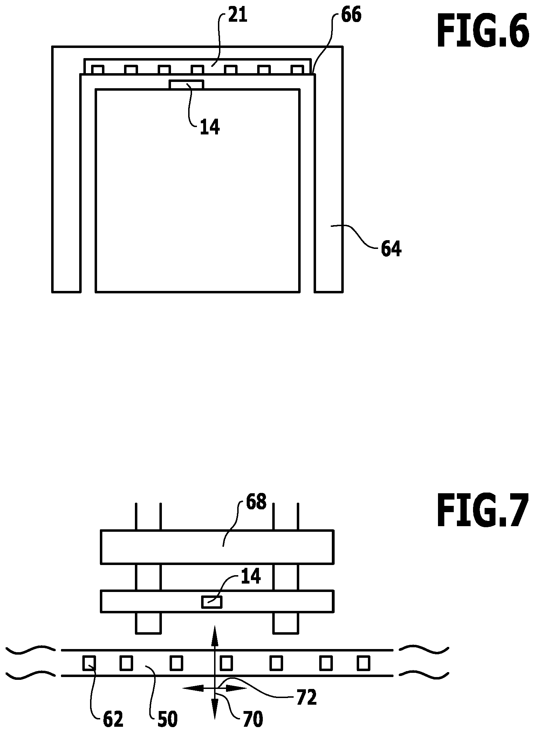

Ein Ausführungsbeispiel eines erfindungsgemäßen Identifikationssystems, welches in Figur 1 gezeigt und dort mit 10 bezeichnet ist, umfasst eine Schreib-/Leseeinrichtung 12 und (mindestens) einen Datenträger 14. Der Datenträger 14 ist an einer Anwendung (vgl. Figuren 6 und 7) fixiert. Die Anwendung kann dabei stationär sein oder sie kann beweglich sein. Bei einer stationären Anwendung kann mittels des Datenträgers 14 beispielsweise überwacht werden, ob beispielsweise die Anwendung an einer vorgegebenen Position vorhanden ist oder nicht. Bei einer mobilen Anwendung kann mittels des Datenträgers 14 überwacht werden, ob diese sich beispielsweise an vorgegebenen Stellen vorbeibewegt.

Der Datenträger 14 weist mindestens einen nichtflüchtigen Speicher 16 auf, in welchem Daten beispielsweise zur Identifizierung der Anwendung sich speichern lassen.

Der Datenträger 14 weist weiterhin eine Antenneneinrichtung 18 mit einer Achse 19 auf, welche senkrecht zu einer Dipolachse ist. Über die Antenneneinrichtung 18 lassen sich Daten empfangen, welche von der Schreib-/Leseeinrichtung 12 gesendet werden beziehungsweise es lassen sich Daten an die Schreib-/Leseeinrichtung 12 senden.

Der Datenaustausch im Identifikationssystem 10, das heißt zwischen der Schreib-/Leseeinrichtung 12 und einem Datenträger 14 erfolgt beispielsweise im UHF-Bereich, das heißt in einem Frequenzbereich zwischen 0,3 GHz und 3 GHz. Bei einem Ausführungsbeispiel erfolgt der Frequenzaustausch bei einer Frequenz von 868 MHz. Die Wellenlänge im UHF-Bereich liegt im Dezimeterbereich.

Der Datenträger 14 ist so ausgebildet, dass er keine eigene Energieversorgungseinrichtung aufweist, sondern die notwendige Energie zu dessen Betrieb und insbesondere zum Empfangen beziehungsweise Senden von Daten über das von der Schreib-/Leseeinrichtung 12 gesandte elektromagnetische Feld bereitgestellt wird.

Der Datenträger 14 ist insbesondere ein RFID-Datenträger.

An die Schreib-/Leseeinrichtung 12 ist (mindestens) ein Aperturstrahler 20 beispielsweise in Form eines Schlitzkabels 21 angeschlossen, welches insbesondere Teil der Schreib-/Leseeinrichtung 12 ist. Zu einem Ende 22 hin ist der Aperturstrahler 20 über eine entsprechende Kupplung mit einem Steuergerät 24 der Schreib-/Leseeinrichtung 12 verbunden. An dem gegenüberliegenden anderen Ende 26 des Aperturstrahlers 20 ist ein Abschlusswiderstand 28 von beispielsweise 50 Ω angeordnet.

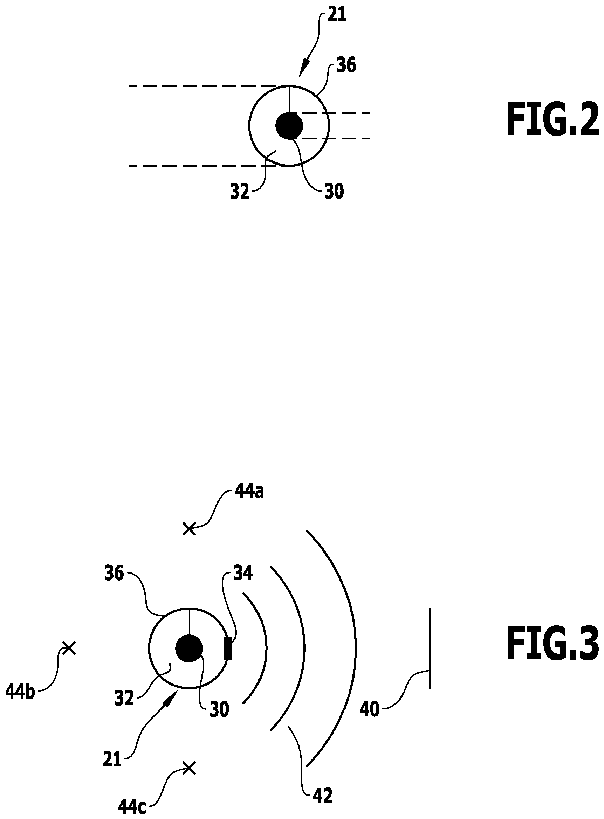

Ein Schlitzkabel 21, welches auch als Leckkabel oder Strahlerkabel bezeichnet ist, ist ein Koaxialkabel mit einem Innenleiter 30 und einem Außenleiter 32 (Figuren 2 und 3). Der Außenleiter 32 bildet einen Schirm. In dem Außenleiter 32 sind beabstandet Schlitze 34 als Aperturen angeordnet (Figuren 1 und 3). Die Schlitze 34 im Außenleiter 32 sind Öffnungen, welche Inhomogenitäten im Wellenleiter bilden. Es können elektromagnetische Energie aus dem Kabel an einem Schlitz 34 austreten. Das elektromagnetische Feld zwischen dem Innenleiter 30 und dem Außenleiter 32 erzeugt an einem Schirm (auf der Außenseite des Außenleiters 32) einen Oberflächenstrom. Die Umleitung dieses Oberflächenstroms um eine Schlitzöffnung erzeugt ein Dipolmoment am Ort eines Schlitzes 34. Dadurch wirkt das Schlitzkabel 21 mit den Schlitzen 34 als Aperturstrahler und insbesondere der magnetische Feldanteil des elektromagnetischen Feldes zwischen dem Außenleiter 32 und dem Innenleiter 30 wird anteilig abgestrahlt. (Der elektrische Feldanteil der Welle durchdringt die Schlitzöffnung ebenfalls, jedoch senkrecht zum magnetischen Feldanteil.)

Durch Größe, Form und Abstand der Schlitze 34 lässt sich das Abstrahlverhalten des Schlitzkabels 21 einstellen.

Der Datenträger 14 kann im Nahbereich des Aperturstrahlers 20 an dieses koppeln. Der Nahbereich ist größenordnungsmäßig durch die halbe Wellenlänge definiert. Bei 868 MHz beträgt die Wellenlänge 32 cm und der Nahbereich liegt dann in einem Abstand in der Größenordnung von 16 cm von dem Aperturstrahler 20. Es tritt keine keulenförmige Begrenzung der Abstrahlungscharakteristik auf; das Signal lässt sich über die ganze Länge des Schlitzkabels 21, in dem Schlitze vorhanden sind, gleichmäßig abstrahlen. Es kommt nicht oder nur in geringem Umfang zu Störungen durch Reflexionen und Interferenzen.

Der Aperturstrahler 20 weist eine Längserstreckungsrichtung 33 auf. In dieser Längserstreckungsrichtung 33 sind die Aperturen (Schlitze) 34 beabstandet zueinander angeordnet.

Es ist dabei möglich, dass der Datenträger 14 parallel zu der Längserstreckungsrichtung 33 bewegt wird. Dies ist in Figur 1 durch die Richtung mit dem Bezugszeichen 35a angedeutet. In diesem Falle ist die Achse 19 der Antenne des Datenträgers 14 mindestens näherungsweise parallel zu der Längserstreckungsrichtung 33 ausgerichtet. Der Datenträger 14 bewegt sich vorzugsweise im Nahbereich des Aperturstrahlers 20.

Es ist auch möglich, dass der Datenträger 14 in einer Querrichtung 35b zu der Längserstreckungsrichtung 33 beweglich ist. Dadurch lässt sich insbesondere ein Eindringen des Datenträgers 14 in den Nahbereich des Aperturstrahlers 20 erkennen beziehungsweise ein Herausfahren aus dem Nahbereich lässt sich erkennen.

Es ist dabei möglich, dass ein Aperturstrahler beispielsweise in Form eines Schlitzkabels, verwendet wird, bei dem Schlitzbereiche 36 vorhanden sind, welche beabstandet sind, wobei zwischen beabstandeten Schlitzbereichen jeweils ein Nichtschlitzbereich 38 liegt. Der Abstand zwischen benachbarten Schlitzbereichen 36 ist größer und insbesondere erheblich größer (mehr als das fünffache größer) als ein Abstand zwischen Schlitzen 34 in einem Schlitzbereich 36.

Die Schlitzbereiche 36 lassen sich bei bestimmten Anwendungsfällen dort positionieren, wo eine Überwachung stattfinden soll, während ein Nichtschlitzbereich 38 dort positioniert wird, wo keine Überwachung erfolgen soll. In einem Nichtschlitzbereich 38 lässt sich elektromagnetische Energie mit minimiertem Verlust übertragen und insbesondere zu einem Schlitzbereich 36 zur Abstrahlung beziehungsweise von einem Schlitzbereich 36 weg zur Auswertung führen.

Es ist dabei grundsätzlich möglich, dass Schlitzbereiche 36 und Nichtschlitzbereiche 38 an demselben Schlitzkabel 21 angeordnet sind. Es ist auch möglich, dass getrennte Schlitzkabel mit einem dazwischenliegenden Nichtschlitzkabel gekoppelt werden.

Bei einer bevorzugten Anwendung ist eine Schreibseite/Leseseite 40 (Figur 3) eines Datenträgers 14 den Schlitzen 34 des Schlitzkabels 21 zugewandt. Die Hauptstrahlrichtung (in Figur 3 mit dem Bezugszeichen 42 angedeutet) eines Schlitzkabels 20 geht aus von jeweiligen Schlitzen 34. Eine typische Größenordnung für den Nahbereich, in dem ein Beschreiben/Lesen auf effektive Weise erfolgen kann liegt bei der halben Wellenlänge.

In Positionen 44a, 44b, 44c, welche in Figur 3 angedeutet sind, bei welchen der entsprechende Datenträger 14 nicht in der Hauptstrahlrichtung 42 liegt, ist für eine effektive Beschreibung beziehungsweise ein effektives Lesen ein sehr viel kleinerer Abstand notwendig.

Es kann vorgesehen sein, dass die Schreib-/Leseeinrichtung 12 eine Laufzeitmesseinrichtung 48 umfasst, über welche eine Wellenlaufzeit an dem Schlitzkabel 21 ermittelbar ist. Wenn beispielsweise Daten aus einem Datenträger 14 gelesen werden, wobei an einem bestimmten Schlitz 34 eine elektromagnetische Ankopplung erfolgt, dann kann über die Bestimmung der Wellenlaufzeit die bestimmte Position des Schlitzes (mit der stärksten Empfangscharakteristik) bestimmt werden und dadurch kann dann die Position des Datenträgers 14 relativ zu dem Schlitzkabel 21 mit guter Genauigkeit bestimmt werden. Durch eine Laufzeitmesseinrichtung 48 für die Laufzeit von Wellen an dem Schlitzkabel 12 ist dadurch eine absolute Positionsbestimmung des Datenträgers 14 relativ zu dem Schlitzkabel 21 möglich. Insbesondere wird dann der Abstand zwischen dem Datenträger 14 und dem Schlitzkabel 20 bezogen auf die Erstreckungsrichtung 46 konstant gehalten.

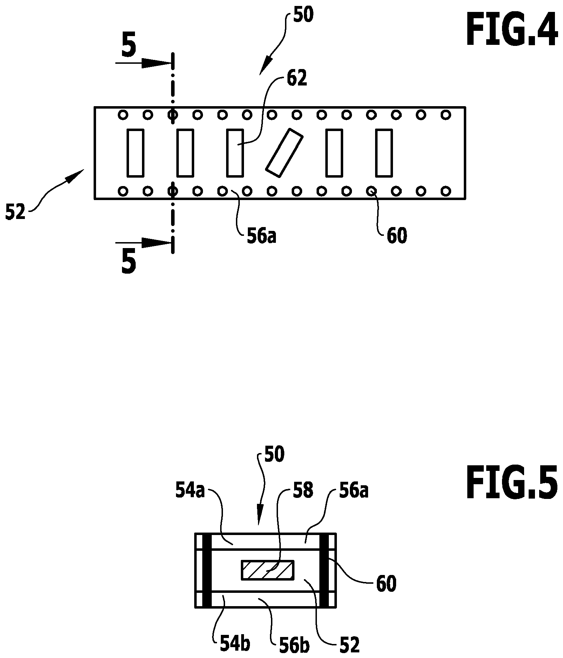

Ein weiteres Ausführungsbeispiel eines Aperturstrahlers, welcher in den Figuren 4 und 5 gezeigt ist und dort mit 50 bezeichnet ist, ist eine strip line. Diese umfasst eine Platine 52 aus einem elektrisch isolierenden Material. An dieser Platine 52 ist an einer Oberseite 54a und einer Unterseite 54b jeweils eine Leiterlage 56a, 56b aus einem Leitermaterial angeordnet. Diese Leiterlagen 56a und 56b sind beispielsweise durch Beschichtung hergestellt.

An der Platine 52 ist weiterhin ein Kern 58 aus einem elektrisch leitenden Material angeordnet, welcher durch elektrisch isolierendes Material der Platine 52 umgeben ist und dadurch elektrisch von den Leiterlagen 56a und 56b getrennt ist.

Durch die Platine 52 verlaufen in der Nähe von lateralen Rändern Ausnehmungen 60 zwischen den Leiterlagen 56a und 56b. Diese Ausnehmungen 60 sind mit elektrisch isolierendem Material gefüllt. Dadurch ist eine Kurzschlussverbindung zwischen den Leiterlagen 56a und 56b hergestellt.

Die Leiterlagen 56a und 56b mit dem leitenden Material und den Ausnehmungen 60 bilden einen Außenleiter. Der Kern 58 bildet einen Innenleiter.

In der Leiterlage 56a und/oder der Leiterlage 56b sind Aperturen 62 beispielsweise in der Form von Schlitzen angeordnet.

Der Aperturstrahler 50 kann durch Verwendung einer starren Platine 52 starr ausgebildet sein oder durch Verwendung einer flexiblen Folie als Platine flexibel und insbesondere biegeflexibel in einer Richtung ausgebildet sein. (Üblicherweise ist ein Schlitzkabel 21 biegeflexibel in mehreren Richtungen.)

Ansonsten funktioniert der Aperturstrahler 50 wie oben beschrieben.

Bei einem weiteren Ausführungsbeispiel ist ein Aperturstrahler 50 beispielsweise in einen Boden integriert. Das Überfahren einer Palette 68, welche mit einem Datenträger 14 versehen ist, kann dann registriert werden.

Wenn der Aperturstrahler 50 eine Mehrzahl von Aperturen 62 aufweist, wobei eine Überfahrrichtung 70 quer zu einer Längserstreckungsrichtung 72 des Aperturstrahlers 50 ist, dann kann grundsätzlich auch die Position dieser Palette 68 bezogen auf die Längserstreckungsrichtung 72 ermittelt werden.

Es gibt eine Unzahl weiterer Anwendungen.

Das erfindungsgemäße Verfahren funktioniert wie folgt:

Bei einem Schreibvorgang wird angesteuert durch das Steuergerät 24 eine elektromagnetische Welle durch das Schlitzkabel 21 abgestrahlt, wobei die Schlitze 34 als Aperturstrahler wirken. Im Nahbereich des Schlitzkabels 21 (welcher die Größenordnung einer halben Wellenlänge hat) kann eine effektive Ankopplung an den Datenträger 14 zum Beschreiben des Datenträgers erfolgen. Der Datenträger 14 ist dabei vorzugsweise mit seiner Schreibseite 40 auf das Schlitzkabel 21 so ausgerichtet, dass diese den Schlitzen 34 als Aperturstrahler gegenüberliegt.

Beim Lesen eines Datenträgers 14 wird entsprechend vorgegangen.

Es ist dabei möglich, dass ein oder mehrere Schlitzkabel 21 kaskadiert werden, indem Schlitzbereiche 36 und Nichtschlitzbereiche 38 alternierend angeordnet sind. Auch ein "multitacking" ist möglich, bei dem ein Datenträger mehreren Schlitzkabeln 21 zugeordnet ist oder mehrere Datenträger einem Schlitzkabel 21 zugeordnet sind.

Grundsätzlich lässt sich das Schlitzkabel 21 mit einer unbegrenzten Länge ausbilden.

Im Nahbereich liegt eine hohe Homogenität des Ankopplungsfelds vor, so dass auch ein Versatz minimiert ist.

Beispielsweise lässt sich ein erfindungsgemäßes Identifikationssystem 10 einsetzen, wenn das Durchfahren von Öffnungen oder Toren 64 überwacht werden soll (Figur 6). Beispielsweise wird ein Rand 66 der Öffnung mit dem Schlitzkabel 21 versehen und ein Durchtauchen eines Datenträgers 14 durch die Öffnung lässt sich überwachen. Grundsätzlich kann mit einem Schlitzkabel 21 die gesamte Umrandung der Öffnung überwacht werden. Auch wenn die exakte Position eines Datenträgers 14 nicht bekannt ist, lässt sich die Überwachung auf einfache Weise durchführen. Es lässt sich dabei grundsätzlich auch, insbesondere im Zusammenhang mit einer Laufzeitmessung, die Position des Datenträgers 14 beim Durchtauchen ermitteln.

Durch das Vorsehen mindestens eines Schlitzkabels 21 können auch lange Verfahrwege gleichmäßig und kostengünstig überwacht werden, da über einen großen Bereich eine "Strahlungsbeaufschlagung" möglich ist. Grundsätzlich ist ein großer Versatz über mehrere Meter (bei einer typischen Kabeldämpfung von 5 dB auf 100 Meter) möglich.

Bei einem Einbau in Metall sollten die Schlitze 34 nicht von Metall umgeben sein.

### BEZUGSZEICHENLISTE

- 10: Identifikationssystem
- 12: Schreib-/Leseeinrichtung
- 14: Datenträger
- 16: Speicher
- 18: Antenneneinrichtung
- 19: Achse
- 20: Aperturstrahler
- 21: Schlitzkabel
- 22: Ende
- 24: Steuergerät
- 26: Ende
- 28: Abschlusswiderstand
- 30: Innenleiter
- 32: Außenleiter
- 33: Längserstreckungsrichtung
- 34: Schlitze
- 35a: Richtung
- 35b: Richtung
- 36: Schlitzbereich
- 38: Nichtschlitzbereich
- 40: Schreibseite/Leseseite
- 42: Hauptstrahlrichtung
- 44a, b, c: Positionen
- 46: Erstreckungsrichtung
- 48: Laufzeitmesseinrichtung
- 50: Aperturstrahler
- 52: Platine
- 54a: Oberseite
- 54b: Unterseite
- 56a: Leiterlage
- 56b: Leiterlage
- 58: Kern
- 60: Ausnehmung
- 62: Apertur
- 64: Tor
- 66: Rand
- 68: Palette
- 70: Überfahrrichtung
- 72: Längserstreckungsrichtung

## Patentansprüche

1. Identifikationssystem, umfassend mindestens einen Datenträger (14), wobei in einem Speicher (16) des Datenträgers (14) Daten gespeichert oder speicherbar sind und wobei der Datenträger (14) keine eigene Energiequelle aufweist, und mindestens eine Schreib-/Leseeinrichtung (12), durch welche Daten in den Speicher (16) berührungslos schreibbar sind und/oder Daten aus dem Speicher (16) berührungslos auslesbar sind, und wobei an der mindestens einen Schreib-/Leseeinrichtung (12) mindestens ein Aperturstrahler (20) mit mindestens einer Apertur (34) angeschlossen ist, **dadurch gekennzeichnet, dass** der mindestens eine Aperturstrahler (20) eine linienförmige Antenne mit einer Mehrzahl von in einer Längserstreckungsrichtung des Aperturstrahlers beabstandeten Aperturen (34) bildet.

2. Identifikationssystem nach Anspruch 1, **dadurch gekennzeichnet, dass** der mindestens eine Aperturstrahler (20) ein Schlitzkabel (21) ist.

3. Identifikationssystem nach einem der vorangehenden Ansprüche, **dadurch gekennzeichnet, dass** der mindestens eine Aperturstrahler (20) eine strip line (50) ist.

4. Identifikationssystem nach einem der vorangehenden Ansprüche, **dadurch gekennzeichnet, dass** die Energie für einen Datenaustausch mit der Schreib-/Leseeinrichtung (12) durch die Schreib-/Leseeinrichtung (12) bereitgestellt ist.

5. Identifikationssystem nach einem der vorangehenden Ansprüche, **dadurch gekennzeichnet, dass** eine Frequenz für den Datenaustausch im GHz-Bereich liegt und/oder dass eine Frequenz für den Datenaustausch im UHF-Bereich liegt.

6. Identifikationssystem nach einem der vorangehenden Ansprüche, **dadurch gekennzeichnet, dass** der mindestens eine Datenträger (14) im Nahbereich des mindestens einen Aperturstrahlers (20) positioniert ist und/oder in diesen und/oder in diesem beweglich ist.

7. Identifikationssystem nach einem der vorangehenden Ansprüche, **dadurch gekennzeichnet, dass** der mindestens eine Aperturstrahler (20) mit einem Abschlusswiderstand (28) versehen ist.

8. Identifikationssystem nach einem der vorangehenden Ansprüche, **dadurch gekennzeichnet, dass** eine Bewegungsrichtung einer Bewegung des mindestens einen Datenträgers (14) relativ zu der Schreib-/Leseeinrichtung (12) mindestens näherungsweise parallel zu einer Längserstreckungsrichtung (33; 72) des mindestens einen Aperturstrahlers (20) ist und/oder quer zu dieser Längserstreckungsrichtung (33; 72) ist.

9. Identifikationssystem nach einem der vorangehenden Ansprüche, **dadurch gekennzeichnet, dass** an die mindestens eine Schreib-/Leseeinrichtung (12) mindestens ein Aperturstrahler (20) angeschlossen ist, welcher einen Aperturbereich (36) mit Aperturen (34) aufweist, und insbesondere dass eine Mehrzahl von Aperturbereichen (36) vorgesehen ist, wobei benachbarte Aperturbereiche (36) beabstandet sind mit einem zwischenliegenden Nichtaperturbereich (38), wobei der Abstand zwischen Aperturen (34) in einem Aperturbereich (36) kleiner ist als der Abstand zwischen Aperturbereichen (36).

10. Identifikationssystem nach einem der vorangehenden Ansprüche, **dadurch gekennzeichnet, dass** der mindestens eine Datenträger (14) bezüglich einer Schreibseite/Leseseite (40) der mindestens einen Apertur (34) des mindestens einen Aperturstrahlers (20) zugewandt ist.

11. Identifikationssystem nach einem der vorangehenden Ansprüche, **dadurch gekennzeichnet, dass** die Schreib-/Leseeinrichtung (12) eine Laufzeitmesseinrichtung (48) aufweist, durch welche eine Wellenlaufzeit an dem mindestens einen Aperturstrahler (20) messbar ist.

12. Identifikationssystem nach einem der vorangehenden Ansprüche, **dadurch gekennzeichnet, dass** der mindestens eine Aperturstrahler (50) eine Platine (52) aufweist, an welcher Leiterlagen (56a, 56b) und ein Kern (58) angeordnet sind, wobei in mindestens einer Leiterlage (56a, 56b) mindestens eine Apertur (62) gebildet ist, und insbesondere dass die Leiterlagen (56a, 56b) leitend verbunden sind, und insbesondere **gekennzeichnet durch** Ausnehmungen (60), welche zwischen den Leiterlagen (56a, 56b) verlaufen und mit Leitermaterial gefüllt sind.

13. Verfahren zum berührungslosen Beschreiben und/oder Lesen eines Speichers eines Datenträgers ohne eigene Energiequelle, bei welchem elektromagnetische Energie über einen Aperturstrahler einer Schreib-/Leseeinrichtung (12) abgestrahlt und/oder empfangen wird und der Datenträger mit einer Schreibseite und/oder Leseseite auf Aperturen des Aperturstrahlers ausgerichtet wird, wobei der mindestens eine Aperturstrahler (20) eine linienförmige Antenne mit einer Mehrzahl von in einer Längserstreckungsrichtung des Aperturstrahlers beabstandeten Aperturen (34) bildet.

14. Anwendung, welche ein Identifikationssystem, gemäß einem der Ansprüche 1 bis 12, aufweist, wobei der mindestens eine Aperturstrahler an einem Durchfahrtsbereich oder Positionierbereich für ein Objekt angeordnet ist, welches mit mindestens einem der Datenträger (14) versehen ist.

## Claims

1. Identification system, comprising at least one data carrier (14), wherein data are stored or storable in a memory (16) of the data carrier (14) and wherein the data carrier (14) has no source of energy of its own, and comprising at least one read/write device (12) by means of which data can be contactlessly written into the memory (16) and/or data can be contactlessly read from the memory (16), and wherein at least one aperture antenna (20) with at least one aperture (34) is connected to the at least one read/write device (12), **characterized in that** the at least one aperture antenna (20) forms a line-shaped antenna with a plurality of apertures (34) spaced in a direction of longitudinal extent of the aperture antenna.

2. Identification system in accordance with claim 1, **characterized in that** the at least one aperture antenna (20) is a slotted cable (21).

3. Identification system in accordance with any one of the preceding claims, **characterized in that** the at least one aperture antenna (20) is a strip line (50).

4. Identification system in accordance with any one of the preceding claims, **characterized in that** the energy for a data exchange with the read/write device (12) is provided by the read/write device (12).

5. Identification system in accordance with any one of the preceding claims, **characterized in that** a frequency for the data exchange lies in the GHz range and/or **in that** a frequency for the data exchange lies in the UHF range.

6. Identification system in accordance with any one of the preceding claims, **characterized in that** the at least one data carrier (14) is positioned in the close range of the at least one aperture antenna (20) and/or is movable into the close range and/or is movable in the close range.

7. Identification system in accordance with any one of the preceding claims, **characterized in that** the at least one aperture antenna (20) is provided with a terminating resistor (28).

8. Identification system in accordance with any one of the preceding claims, **characterized in that** a direction of movement of a movement of the at least one data carrier (14) relative to the read/write device (12) is at least approximately parallel to a direction of longitudinal extent (33; 72) of the at least one aperture antenna (20) and/or is transverse to this direction of longitudinal extent (33; 72).

9. Identification system in accordance with any one of the preceding claims, **characterized in that** at least one aperture antenna (20) comprising an aperture area (36) with apertures (34) is connected to the at least one read/write device (12), and, in particular, **in that** a plurality of aperture areas (36) are provided, adjacent aperture areas (36) being spaced apart with a non-aperture area (38) located between them, the spacing between apertures (34) in an aperture area (36) being smaller than the spacing between aperture areas (36).

10. Identification system in accordance with any one of the preceding claims, **characterized in that** with respect to a read side/write side (40) the at least one data carrier (14) faces the at least one aperture (34) of the at least one aperture antenna (20).

11. Identification system in accordance with any one of the preceding claims, **characterized in that** the read/write device (12) comprises a running time measuring device (48) by means of which a wave running time can be measured at the least one aperture antenna (20).

12. Identification system in accordance with any one of the preceding claims, **characterized in that** the at least one aperture antenna (50) comprises a printed circuit board (52) on which conductor layers (56a, 56b) and a core (58) are arranged, at least one aperture (62) being formed in at least one conductor layer (56a, 56b), and, in particular, **in that** the conductor layers (56a, 56b) are conductively connected, and, in particular, **characterized by** recesses (60) which extend between the conductor layers (56a, 56b) and are filled with conductor material.

13. Method for contactlessly writing into and/or reading from a memory of a data carrier without its own source of energy, wherein electromagnetic energy is emitted and/or received via an aperture antenna of a read/write device (12) and the data carrier is directed with a read side and/or write side at apertures of the aperture antenna, the at least one aperture antenna (20) forming a line-shaped antenna with a plurality of apertures (34) spaced apart in a direction of longitudinal extent of the aperture antenna.

14. Application, comprising an identification system, in accordance with any one of claims 1 to 12, wherein the at least one aperture antenna is arranged at a transit area or positioning area for an object which is provided with at least one of the data carriers (14).

## Revendications

1. Système d'identification, comprenant au moins un support de données (14), des données étant mises en mémoire ou pouvant être mises en mémoire dans une mémoire (16) du support de données (14) et le support de données (14) ne présentant pas de source d'énergie propre, et au moins un dispositif d'écriture/lecture (12), par l'intermédiaire duquel des données peuvent être écrites sans contact dans la mémoire (16) et/ou des données peuvent être extraites sans contact de la mémoire (16), et
en ce qu'au moins une antenne à ouverture rayonnante (20) avec au moins une ouverture (34) est raccordée à l'au moins un dispositif d'écriture/lecture (12), **caractérisé en ce que** l'au moins une antenne à ouverture rayonnante (20) forme une antenne linéaire avec une pluralité d'ouvertures (34) espacées dans une direction longitudinale de l'antenne à ouverture rayonnante.

2. Système d'identification selon la revendication 1, **caractérisé en ce que** l'antenne ou les antennes à ouverture rayonnante (20) sont un câble rayonnant (21).

3. Système d'identification selon l'une quelconque des revendications précédentes, **caractérisé en ce que** l'antenne ou les antennes à ouverture rayonnante (20) sont une ligne ruban (50).

4. Système d'identification selon l'une quelconque des revendications précédentes, **caractérisé en ce que** l'énergie pour un échange de données avec le dispositif d'écriture/lecture (12) est fournie par le dispositif d'écriture/lecture (12).

5. Système d'identification selon l'une quelconque des revendications précédentes, **caractérisé en ce qu'**une fréquence pour l'échange de données se situe dans la plage GHz et/ou **en ce qu'**une fréquence pour l'échange de données se situe dans la plage UHF.

6. Système d'identification selon l'une quelconque des revendications précédentes, **caractérisé en ce que** le ou les supports de données (14) sont positionnés à proximité de l'antenne ou des antennes à ouverture rayonnante (20) et/ou sont mobiles dans celles-ci et/ou dans celle-ci.

7. Système d'identification selon l'une quelconque des revendications précédentes, **caractérisé en ce que** l'antenne ou les antennes à ouverture rayonnante (20) sont pourvues d'une résistance terminale (28).

8. Système d'identification selon l'une quelconque des revendications précédentes, **caractérisé en ce qu'**un sens de mouvement d'un mouvement du ou des supports de données (14) par rapport au dispositif d'écriture/lecture (12) est au moins presque parallèle à une direction longitudinale (33 ; 72) de l'antenne ou des antennes à ouverture rayonnante (20) et/ou est transversal à cette direction longitudinale (33 ; 72).

9. Système d'identification selon l'une quelconque des revendications précédentes, **caractérisé en ce qu'**au moins une antenne à ouverture rayonnante (20), laquelle comprend une zone d'ouverture (36) pourvue d'ouvertures (34), est raccordée au ou aux dispositifs d'écriture/lecture (12), et en particulier **en ce qu'**une pluralité de zones d'ouverture (36) sont prévues, des zones d'ouverture (36) voisines étant espacées d'une zone exempte d'ouverture (38) située entre celles-ci, l'écart entre les ouvertures (34) dans une zone d'ouverture (36) étant inférieur à l'écart entre les zones d'ouverture (36).

10. Système d'identification selon l'une quelconque des revendications précédentes, **caractérisé en ce que** le ou les supports de données (14), par rapport à une face d'écriture/lecture (40), sont tournés vers l'ouverture ou les ouvertures (34) de l'antenne ou des antennes à ouverture rayonnante (20).

11. Système d'identification selon l'une quelconque des revendications précédentes, **caractérisé en ce que** le dispositif d'écriture/lecture (12) comprend un dispositif de mesure de temps de propagation (48) permettant de mesurer un temps de propagation des ondes sur l'antenne ou les antennes à ouverture rayonnante (20).

12. Système d'identification selon l'une quelconque des revendications précédentes, **caractérisé en ce que** l'antenne ou les antennes à ouverture rayonnante (50) comprennent une platine (52) sur laquelle des couches conductrices (56a, 56b) et un noyau (58) sont agencés, au moins une ouverture (62) étant ménagée dans au moins une couche conductrice (56a, 56b), et en particulier **en ce que** les couches conductrices (56a, 56b) sont reliées de manière conductrice, et en particulier **caractérisé par** des évidements (60), lesquels s'étendent entre les couches conductrices (56a, 56b) et sont remplis d'un matériau conducteur.

13. Procédé d'écriture et/ou de lecture sans contact d'une mémoire d'un support de données sans source d'énergie propre, selon lequel une énergie électromagnétique est émise et/ou reçue par l'intermédiaire d'une antenne à ouverture rayonnante (20) d'un dispositif d'écriture/lecture (12) et le support de données est orienté par une face d'écriture et/ou une face de lecture vers des ouvertures de l'antenne à ouverture rayonnante, l'antenne ou les antennes à ouverture rayonnante (20) formant une antenne linéaire comprenant une pluralité d'ouvertures (34) espacées dans une direction longitudinale de l'antenne à ouverture rayonnante.

14. Application, laquelle comprend un système d'identification, selon l'une quelconque des revendications 1 à 12, l'antenne ou les antennes à ouverture rayonnante étant agencées sur une zone de passage ou une zone de positionnement pour un objet, lequel est pourvu d'au moins un des supports de données (14).
